# EUROPEAN PATENT APPLICATION

(11) **EP 4 752 612 A1**
(43) Date of publication of application: **03.06.2026**
(21) Application number: 24216532.2
(22) Date of filing: 29.11.2024
(51) Int. Cl.: G02B 6/38

(54) **CONNECTOR HOUSING FOR AN OPTICAL CONNECTOR**

(71) Applicant: ODU GmbH & Co KG., 84453 Mühldorf a. Inn (DE); ROSENBERGER HOCHFREQUENZTECHNIK GMBH & CO. KG, 83413 Fridolfing (DE)
(72) Inventor: BRECHTEL, Michael, 86167 Augsburg (DE); AIGNER, Jennifer, 84453 Muehldorf a. Inn (DE); WEIDENSPOINTNER, Rudolf, 84453 Muehldorf a. Inn (DE)
(74) Representative: Huebner, Stefan Rolf

(57) **Abstract**

A connector housing (1) for an optical connector comprising a main body (2) and a ferrule carrier (6) attached to the main body (2), characterised at least a section (3) of the connector housing (1), along the mating axis, has an essentially circular outer perimeter. Moreover, a method of assembling a connector housing (1), the method comprising the steps of: Assembling the ferrule carrier (6) with an end section (11) of an optical cable (12); and inserting the assembly of the ferrule carrier (6) and the end section (11) of the optical cable (12) into the main body (2). Further, a connector part (28) comprising an outer housing (4) and a connector housing (1) according one of the preceding claims held in the outer housing (4).

## Description

### Field of the invention

The invention relates to a connector housing for an optical connector. The invention further relates to a method of assembling a connector housing. Moreover, the invention relates to a connector part comprising the connector housing.

### Background of the invention

From US 8 961 033 B2 an optical contact is known that has a coupling unit extending along a longitudinal axis and a body within which the coupling unit is received in a movable manner. The body surrounds the outside of the coupling unit around its longitudinal axis. The body is made up of two parts that can be releasably assembled with each other. This is meant to provide for the optical contact to be simply and inexpensively repaired or modified without re-cabling the coupling unit.

US 11 662 528 B2 discloses an optical assembly includes a coupling unit assembly and a hermaphroditic cassette comprising a hood and a mating hood, each including a narrower section and a wider section. The hoods are assembled to form the cassette. The coupling unit subassembly comprises a coupling unit and a cable retainer. An insertion tool is provided to help place the optical coupling unit subassembly into the cassette, ensuring precise alignment and secure placement. During mating, the narrower and the wider sections fit together to ensure proper alignment and protection.

An optical connector assembly known from US 11 662 528 B2 includes a housing, an optical coupling unit, a substantially flat optical fibre array and a retainer. The housing has a mating end and a cable end, with front, middle, and rear supports to hold the coupling unit, the fibre array and the retainer. The housing comprises a first and a second portion. The second portion contains the middle supports. The middle support helps in bending the optical fibre array, which causes the coupling unit to rotate for precise alignment.

### Object of the invention

It is an object of the present invention to provide an improved connector housing for an optical connector. The invention further aims at providing an improved method of assembling a connector housing. It is another object of the invention to provide an improved connector part comprising the connector housing.

### Solution according to the invention

In the following, any reference to one (including the articles "a" and "the"), two or another number of objects is, provided nothing else is expressly mentioned, is meant to be understood as not excluding the presence of further such objects in the invention. The reference numerals in the patent claims are not meant to be limiting but merely serve to improve readability of the claims.

According to a first aspect of the invention, the problem is solved by a connector housing for an optical connector, the connector housing comprising the features of claim 1. The connector housing comprises a main body and a ferrule carrier attached to the main body. At least a section of the connector housing is a cylinder with an essentially circular outer perimeter. It is an achievable advantage of this aspect of the invention that the connector housing can be held fixedly in an essentially circular hole of an outer housing.

In the context of the present invention, the term "**housing for an optical connector**" refers to a housing that can hold an end section of an optical cable, the end section including a ferrule, and which can expose the ferrule for mating with another, complementary ferrule, such as that of a complementary connector part, to establish an optical connection between the ferrule and the other ferrule.

A "**ferrule carrier**" as referred to herein is a part of the connector housing that holds a ferrule (sometimes also referred to as acoupling unit) of an optical cable. A preferred ferrule comprises a body that is attached to the terminated end of an optical cable, and an extension that protrudes from the body and contains one or more optical interface point(s). Preferred the optical interface point(s) can align with corresponding point(s) on another ferrule when the two are interlocked. With the optical interface point(s) it is achievable that light can travel seamlessly from one ferrule to the other, minimizing loss and maintaining signal integrity. A particularly preferred ferrule comprises one or more lens(es) to direct the light from the cable to the optical interface point(s). Such ferrule is sometimes referred to as a lens connector. A suitable ferrule is, for example, disclosed in US 11977262 B1. Suitable ferrules are available from 3M Electronics Materials Solutions Division, 6801 River Place Blvd Austin, TX 78726-9000 (www.3M.com/interconnect), under the name "optical connect".

In the context of the present invention, the "**outer perimeter**" of a section of the connector housing is circular, if an enveloping surface of the section has a circular cross section, ie, is a circular cylinder. Note that a circular outer perimeter does not imply that the cross section of the section of the connector housing is circular; rather there are many other cross-sectional shapes that have a circular outer perimeter according to the above definition. For example, a star of David has six outermost points all of which are arranged on a circle, and accordingly a cylinder with such cross section had a circular cross section and thus the cylinder has a circular outer perimeter. Likewise, a cross section of circular sections interrupted by indentation(s) and/or flat sections would likewise be considered to have a circular outer perimeter.

As used herein, the term "**cylinder**" is meant to indicate that the section of the connector housing has a cylindrical outer surface. In this context, a "cylindrical surface" is defined by having straight parallel sides, ie, the outer surface consists of all parallel lines that pass through a closed curve, commonly referred to as the directrix. The directrix is not necessarily circular.

According to a third aspect of the invention, the problem is solved by a method of assembling a connector housing for an optical connector, the method comprising the features of claim 14. The method comprises at least the steps of: Assembling the ferrule carrier with an end section of an optical cable comprising a ferrule; and inserting the assembly of the ferrule carrier and the cable end into a main body of the connector housing.

It is an achievable advantage of this aspect of the invention that the end section of the optical cable can quickly and conveniently be placed in the connector housing. In the context of the present invention, an "**end section of an optical cable**" is a cable end section that comprises at least one optical waveguide and has a ferrule at its end for connecting the cable with another optical cable in order to establish an optical connection.

According to a fourth aspect of the invention, the problem is solved by a connector part with the features of claim 15. The connector part comprises an outer housing and a connector housing according to one of the preceding claims held in the outer housing.

It is an achievable advantage of this aspect of the invention that the outer housing can comprise means for mating the connector part with or securing the connector part to a complementary connector part. It is another achievable advantage of this aspect of the invention that the outer housing can be universal in the sense that instead of or in addition to the connector housing according to the invention, it can hold other connector components, for example electrical contacts, contacts of a coaxial cable, or the end section of a fluid conduit.

As used here, the term "**connector part**" refers to a device that can be mated with another, complementary connector part to establish an optical connection, in some embodiments jointly with an electric connection and/or a fluid connection.

### Preferred embodiments of the invention

Preferred features of the invention which may be applied alone or in combination are discussed in the following and in the dependent claims.

A preferred connector housing comprises a main body and a ferrule carrier attached to the main body. The preferred ferrule carrier is mounted movably relatively to the main body in a direction parallel to a mating axis of the connector. It is achievable with this embodiment of the invention that regardless of the exact position of the main body the ferrule can be positioned such that proper mating with another, complementary ferrule can be ensured.

The term "**mating axis**" as used herein refers to an axis of the connector housing that extends in the direction in which the connector housing must approach a complementary connector housing or connector part to mate the connector housing with the complementary connector housing or connector part to establish an optical connection.

Preferably, the ferrule carrier is guided in the main body such that relatively to the main body it can essentially only move in a direction parallel to a mating axis of the connector. Yet, the invention also encompasses embodiments in which the ferrule carrier is guided to move in a direction that is at an angle to the mating axis of the connector. Moreover, the invention also encompasses embodiments in which the ferrule carrier can move in multiple linearly independent directions.

A preferred ferrule carrier is elastically mounted in the main body. In other words, the preferred ferrule carrier can be displaced relatively to the main body upon application of an external force and can resiliently return to a position before displacement.

The elasticity preferably is provided by an elastic element. In other words, the preferred connector housing is provided with an elastic element to elastically mount the ferrule carrier in the main body. Preferably, the elastic element is placed between the ferrule carrier and the main body, more specifically between the ferrule carrier and an elastic element holder as discussed further below. The elastic element preferably is a spring, such as a coil spring or a meander spring, for example a U-shaped or a V-shaped meander spring. Yet, the invention also encompasses other elastic elements such as a piece of rubber or elastic foam material. A preferred elastic element is from metal, preferably spring steel, for example a spring made of spring steel. An alternative preferred spring is from a plastic material, for example a meander spring made of plastic.

The preferred connector housing comprises an elastic element holder for holding the elastic element. In this context, "holding the elastic element" means that the elastic element sits in or on the elastic element holder or presses against the elastic element holder. Preferably, the elastic element holder is fixedly attached to the main body. A preferred elastic element holder is a piece separate from the main body but fixed or fixable to the main body.

Preferably, the elastic element is formed in one piece - more preferably moulded such as injection moulded in one piece - with the main body, part of the main body, the ferrule carrier and/or part of the ferrule carrier. Advantageously, this can simplify the manufacture and/or the assembly of the connector housing of the present invention. Particularly preferably, the elastic element is formed in one piece with the elastic element holder, more preferably with the elastic element holder and the ferrule carrier.

Alternatively, the ferrule carrier, the elastic element and the elastic element holder can be assembled from separate parts. Preferably, the ferrule carrier and elastic element holder comprise complementary attachment means to movably attach these two parts to each other.

Preferably, the ferrule carrier is biased towards the distal end of the main body. In the context of the present invention, the "**distal end**" of the connector housing is the end with which the connector housing must approach a complementary connector housing or connector part to mate and establish an optical connection. The end of connector housing opposite the distal end is herein referred to as the "**proximal end**". Correspondingly, the main body of the connector and the ferrule carrier also have distal and proximal ends. The mating axis extends through the distal end and the proximal ends of the connector housing.

In a preferred embodiment of the invention, at least a section of the connector housing is a cylinder with an essentially circular outer perimeter. Advantageously, in this embodiment of the invention the connector housing can be held fixedly in an essentially circular hole of an outer housing. Preferably, the outer perimeter of the section is provided by the outer perimeter of a section of the main body of the connector housing. The preferred main body is at least party hollow. Inside the hollow main body, (at least part of the ferrule carrier and the cable end can be housed.

Preferably, the connector housing comprises more than one section that is a cylinder with an essentially circular outer perimeter, more preferably more than 2, for example 3 sections. Preferably at least one of the sections is longer than the radius of its outer perimeter. In a preferred embodiment of the invention, at least one, more preferably at least two, even more preferably at least three, even more preferably all of the sections have an essentially circular cross-section. Preferably the radius of the outer perimeter is identical in at least two, more preferably at least three, even preferably all of the sections. Preferably, the diameter of the outer perimeter of the section with the largest outer perimeter is more than 5 mm (millimeters), more preferably more than 6 mm, even more preferably more than 8 mm. Preferably, the diameter of the outer perimeter of the section with the largest outer perimeter is less than 20 mm, more preferably less than 16 mm, even more preferably less than 12 mm.

The preferred main body essentially has the shape of a cylindrical sleeve with a cut-out at its distal end. Along the perimeter of the main body, the cut-out spans less than half of the circumference of the main body. It is achievable with this embodiment of the invention that the connector housing can arranged relatively to an identical connector housing, which housings are rotated about the mating axis by 180° relatively to each other, such that each main body extends into the cavity of the other main body.

Along the perimeter of the main body, the cut-out preferably spans more than a quarter, more preferably more than a third of the circumference of the main body. Along the direction of the mating axis, the cut-out preferably extends more than 4 mm (millimetres), more preferably more than 6 mm, even more preferably more than 8 millimetres from the distal end towards the proximal end of the main body. Along the direction of the mating axis, the cut-out preferably extends less than 14 mm (millimetres), more preferably less than 12 mm, even more preferably less than 10 millimetres from the distal end towards the proximal end of the main body.

The ferrule carrier preferably extends inside the main body and beyond the proximal end of the cut-out towards the distal end of the main body. As a result, advantageously, the ferrule carrier can at least partially close the cut-out. When fully extended towards the distal end of the main body, the ferrule carrier preferably does not extend beyond the distal end of the main body. Preferably, when the ferrule carrier is pushed in the proximal direction the furthest, it still reaches into the cut-out.

Along the perimeter of the main body at the cut-out, a distal end section of the ferrule carrier spans less than half of the circumference of the main body at its distal end. It is achievable with this embodiment of the invention that the connector housing can arranged relatively to an identical connector housing, which housings are rotated about the mating axis by 180° relatively to each other, such that the ferrule carriers extend inside the other connector housings main body and are arranged in parallel and next to each other. Along the perimeter of the main body at the cut-out, the ferrule carrier spans more than a quarter, preferably more than a thirds of the circumference of the main body.

A preferred connector housing can mate with an identical connector housing, preferably one that is rotated about the mating axis by 180° relatively to the connector housing. Preferably, in the mating process, an end section of the main body of the connector housing is inserted into cut-out of a second main body of the second connector housing and, conversely, an end section of the second main body of the second connector housing is inserted into the cut-out of the main body of the connector housing.

Preferably, when mating the connector housing with an identical connector housing that is rotated about the mating axis by 180° relatively to the connector housing, the end section of the ferrule carrier of the connector housing is inserted into the second main body of the second connector housing and, conversely, a second end section of the second ferrule carrier of the second connector housing is inserted into the main body of the connector housing so that the end section and the second end section are in parallel and adjacent to each other.

The preferred ferrule carrier essentially is semi-tubular with a bottom and side walls. Preferably, in a distal end section of the ferrule carrier, the side walls are lower than in the remainder of the ferrule carrier. With this preferred embodiment of the ferrule carrier, it can be achieved that as end sections of the ferrule carriers extend in parallel and adjacent to each other, the distal end of each ferrule carrier end section abuts against the distal ends of the side walls of the remainder of the other ferrule carrier. Preferably, the elastic element biases the distal end of the ferrule carrier against the distal ends of the side walls of the remainder of the other ferrule carrier. Thereby, it can advantageously be achieved that the two ferrule carriers are in a well-defined relative position along the mating axis irrespective of the exact relative position of the main bodies of the connector housing along the mating axis. This, in turn, can provide for the ferrules to be positioned such that proper mating of the ferrules is be ensured.

Preferably, the ferrule carrier can be inserted into the main body from an end, along the mating axis, of the main body for assembly of the connector housing. It is an achievable advantage of this embodiment of the invention that it allows for an assembly process with the steps of: Assembling the ferrule carrier with an end section of an optical cable; and inserting the assembly of the ferrule carrier and the end section of the optical cable into the main body. With this embodiment of the invention, it is achievable that the optical cable can quickly and conveniently be placed in the connector housing. Particularly preferably, the ferrule carrier can be inserted into the main body from the proximal end, along the mating axis, of the main body.

Preferably an assembly of the ferrule carrier, the elastic element and the elastic element holder can be inserted into the main body from an end of the main body for assembly of the connector housing. This allows for an assembly process of the connector housing with the steps of: Inserting in the assembly of the ferrule carrier, the biasing element and the biasing element holder an end section of an optical cable; and inserting the assembly including the end section of the optical cable into the main body. Particularly preferably an assembly of the ferrule carrier, the elastic element and the elastic element holder can be inserted into the main body from the proximal end of the main body.

Preferably, the elastic element holder can be fixed in the main body by means of fixing means. The preferably fixing means comprise latching elements that latchingly secure the elastic element holder in place once it has been fully inserted into the main body of the connector housing. The latching means of the main body preferably comprise a latching hook and a stop that engage with parts of the elastic element holder.

The optical cable preferably is a cable with multiple stands, for example a flat ribbon cable or a round cable with multiple strands. The preferred cable comprises multiple, preferably more than two, for example 3, 4, 8, 12, 16, 18, 20, 24, 28 or more, parallel strands, at least one of the strands, preferably each of the strands, being an optical wave guide. As used herein, the term "optical wave guide" refers to an optical element that propagates signal light. An optical waveguide comprises at least one core with a cladding, wherein the core and cladding are configured propagate light within the core, eg, by total internal reflection. An optical waveguide may, for example, be a single or multi-mode waveguide, a single core fibre, a multi-core optical fibre, or a polymeric waveguide. At its end, the optical cable is provided with a ferrule, which ferrule can connect to a mating ferrule of another cable.

Preferably, at a distance from the ferrule a collet (sometimes also referred to as a retainer) is fixedly attached to the cable's end section. The preferred ferrule carrier comprises a collet holder for fixing the collet to the ferrule carrier. The collet holder preferably comprises a collet seat and fixing means, for example in the form of a pair of latching hooks, to securely and fixedly hold the collet in the collet seat.

The preferred collet holder is arranged in a way that a collet of a cable end section can fixed to the collet holder such that the cable extends at an angle to the mating axis. Achievable that the section of the cable end that extends from the collet to the ferrule is biased towards one side of the inside of the connector housing. In this context, a "side" is a side in a direction perpendicular to the mating axis. In other words, due to the angle, the cable exits the collet not in parallel to the mating axis but at an angle relatively to the mating axis.

In a preferred embodiment of the invention, the ferrule carrier comprises a ferrule support. The preferred ferrule support is arranged such that the ferrule rests against the ferrule support when the optical cable is placed in the ferrule carrier in the intended manner. Advantageously, the collet holder and the ferrule support can cooperate such that the ferrule is in a position and at an angle to allow for proper and reliable mating with another ferrule, preferably that of another identical assembly of a connector housing and an end section of an optical cable.

Preferably, the connector housing is held in an outer housing of a connector part. The preferred connector part is a male or a female connector part that can be mated with a corresponding female or male connector part. In some embodiments of the invention, the connector part only hold one connector housing, in other embodiments it holds more than one connector housing, more preferably more than two, even more preferably more than 3, for example 4, 5, 6, 7 or 8 connector housings. In some embodiments the connector part in addition to the housing according to the invention holds one or more electrical contact(s) or fluid conduit end(s).

### Brief description of the drawings

In the following, further preferred embodiments of the invention are illustrated by means of examples. The invention is not limited to these examples, however.

The drawings schematically show:
- Figure 1: A perspective view of a connector housing according to the invention;
- Figure 2: A perspective view of the ferrule carrier of the connector housing of figure 1;
- Figure 3: A sectional perspective view of part of the connector housing of Figure 1 showing the ferrule carrier and part of the main body;
- Figure 4: Another sectional perspective view of part of the connector housing of Figure 1 showing the ferrule carrier and part of the main body; the sectional plane is perpendicular to that of Figure 3;
- Figure 5A: A sectional non-perspective view of the same part and with the sectional plane as in the sectional perspective view of Figure 4;
- Figure 5B: A sectional view of the same part as in the sectional perspective view of Figure 4 but with a sectional plane that is at a right angle to that in Figure 4;
- Figure 6A: The sectional non-perspective view of Figure 5A showing in addition a cable end inserted into the ferrule carrier;
- Figure 6B: Another sectional non-perspective view of the same parts as shown in Figure 6A;
- Figure 7: A sectional perspective view of the same parts and with the sectional plane as in the sectional non-perspective view of Figure 6 viewed from the same direction as Figure 4;
- Figure 8: A sectional perspective view of the same parts as in the Figures 6 and 7 but viewed from a different direction with a combination of partial sectional planes that are parallel or perpendicular to each other;
- Figure 9: A sectional perspective view of a connector housings mated with a second connector housing; the sectional plane and the viewing direction are the same as in Figures 4 and 7; and
- Figure 10: A sectional perspective view of a housing part with the housing of Figures 1 to 8 inserted into an outer housing; the sectional plane and the viewing direction are the same as in Figures 4, 7 and 9.

### Detailed description of an embodiment of the invention

In the following description of preferred embodiments of the invention, identical reference numerals refer to identical or similar components.

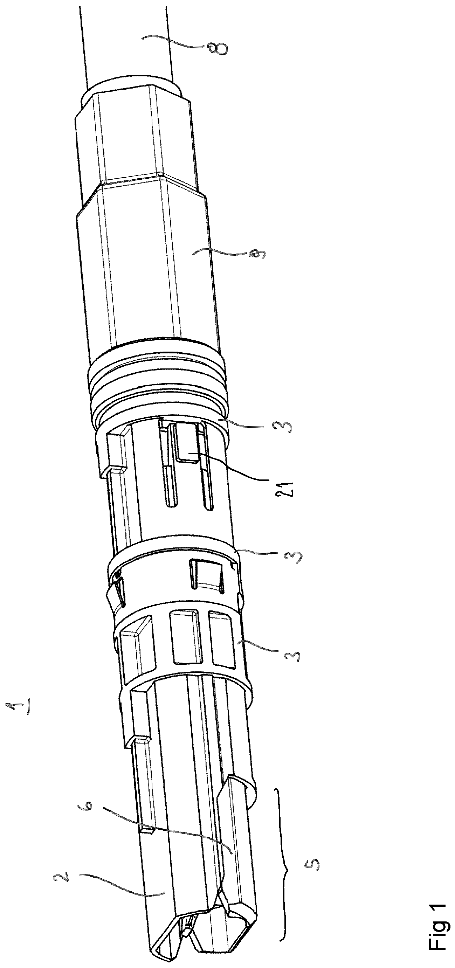

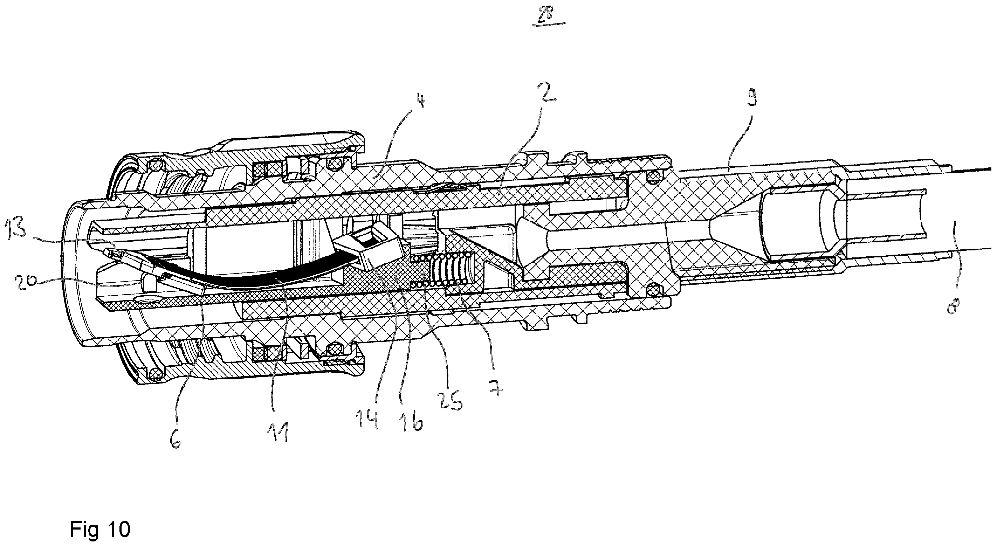

An embodiment of the connector housing 1 according to the present invention is shown in **Figure 1****.** A main body 2 of the connector housing has essentially the shape of a circularly cylindrical sleeve, the cylindrical axis being parallel to a mating axis of the connector housing 1 and its main body 2. In particular, the main body 2 comprise three sections 3 each with a circular outer perimeter. This allows the connector housing 1 to be inserted into a circular through hole of an outer housing 4. Latching fingers 29 can serve to lock the connector housing in the outer housing 4 by latching. An exemplary outer housing 4 is shown in **Figure 10** and will be discussed in more detail further below. The main body 2 moreover comprises a cut-out 5 at its distal end. The cut-out 5, along the perimeter of the main body 2, spans slightly less than half of the circumference of the main body 2.

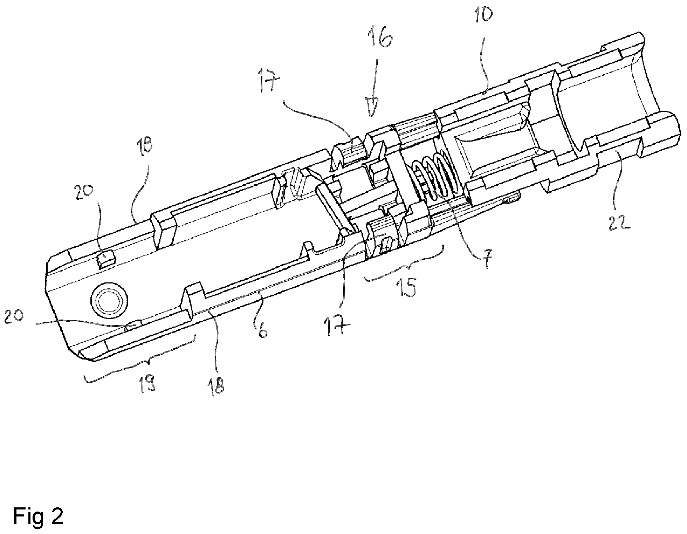

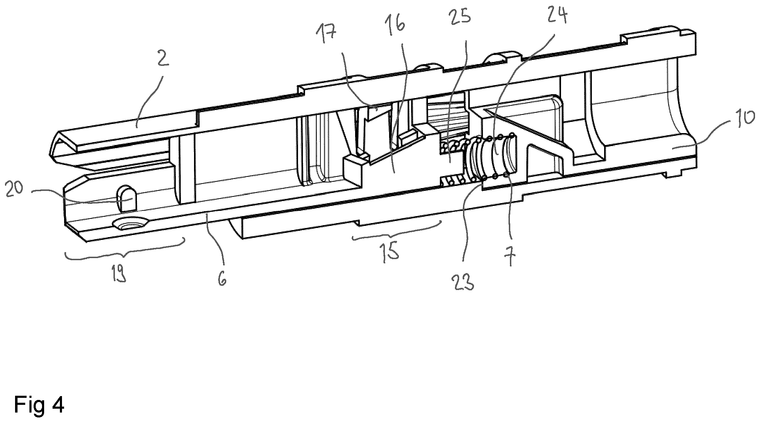

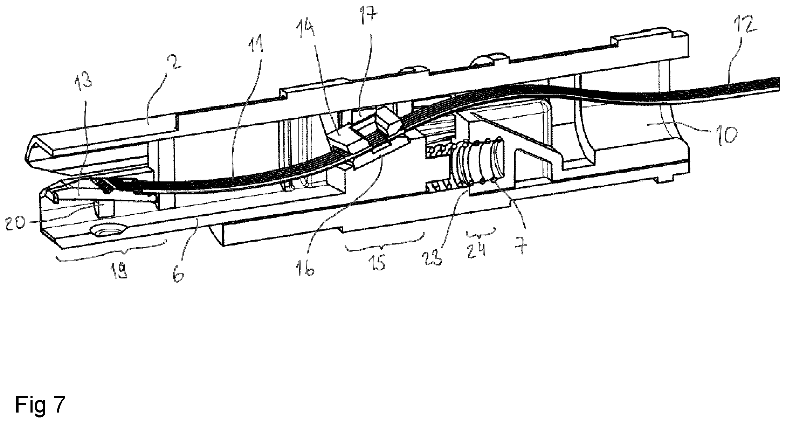

The cut-out 5 is almost fully closed by a ferrule carrier 6 that is movably attached to the main body 2 and guided therein such that can only move in a direction parallel to the mating direction. The ferrule carrier 6 is biased by a coil spring 7 (shown in **Figures 2** **ff**) towards the distal end of the connector housing 1. **Figure 1** as well as **Figures 3 to 8** and **10** show the ferrule carrier 6 in a position relatively to the main body 2 in which the ferrule carrier 6 is fully extended towards the distal end of the connector housing 1.

A cable sheath 8 is attached to the proximal end of the main body via an adapter 9 that has hexagonal outer cross sections. The adapted 9 can assist in inserting the connector housing 1 in an outer housing 4.

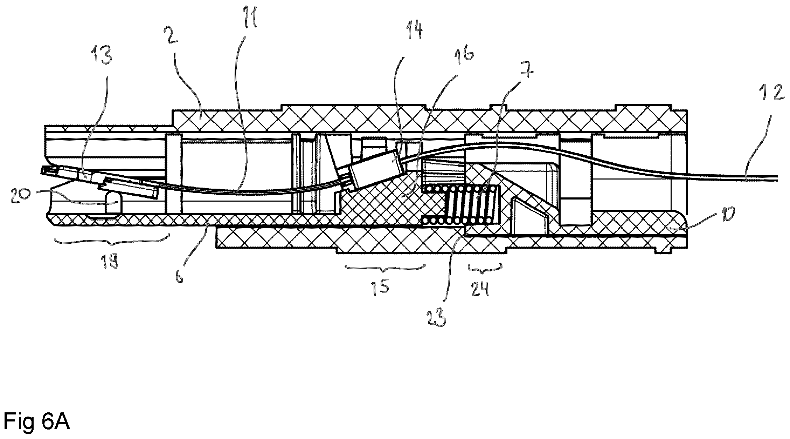

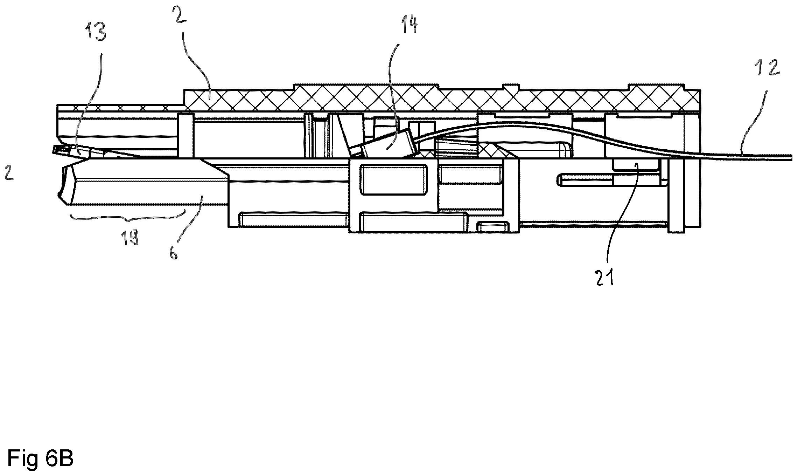

An assembly of the ferrule carrier 5, an elastic element holder 10 and the coil spring 7, which is arranged between the ferrule carrier 6 and the elastic element holder 10, are shown in detail in **Figure 2****.** The ferrule carrier 6 is configured so that it can accommodate an end section 11 of a cable 12 with a ferrule 13 at its end and a collet 14. This will be discussed in further detail below with reference to **Figures 6** **ff.** A collet holder 15 comprises a collet seat 16 and a pair of latching hooks 17 to securely and fixedly hold the collet 14 in the collet seat 16. For simple insertion of the collet 14 in the collet seat 16, bevelled edges of the latching hooks 17 force the latching hooks 17 to give way for the collet 14 when the collet 14 is inserted into the collet holder 15. For releasing the collet 14 to replace the cable end section 11 if necessary, the latching hooks 17 can be bent outward away from the collet 14.

The ferrule carrier 6 essentially is semi-tubular with a bottom and side walls 18. In a distal end section 19 of the ferrule carrier 6, the side walls 18 are lower than in the rest of the ferrule carrier 6. The distal end section 19 of the ferrule carrier 6 is provided with a ferrule support 20 to place and orient the ferrule 13 in a position and at an angle such that it can mate with a second, identical ferrule 13 held in an identical connector housing. The ferrule support 20 comprises of a pair of protrusions from opposite side walls 18 of the ferrule carrier 6.

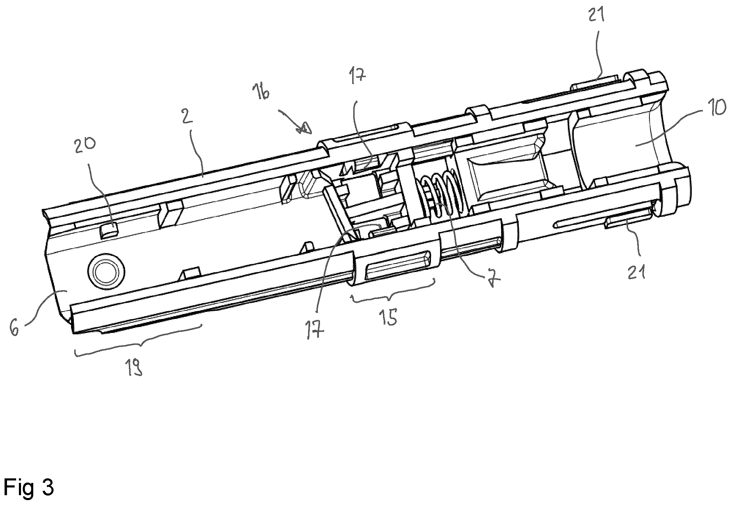

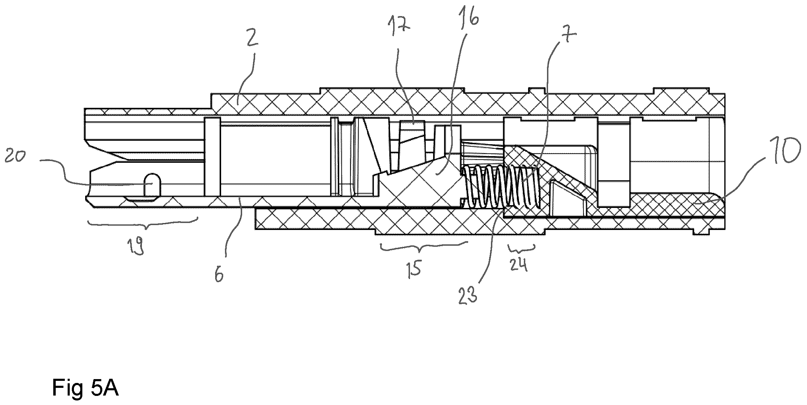

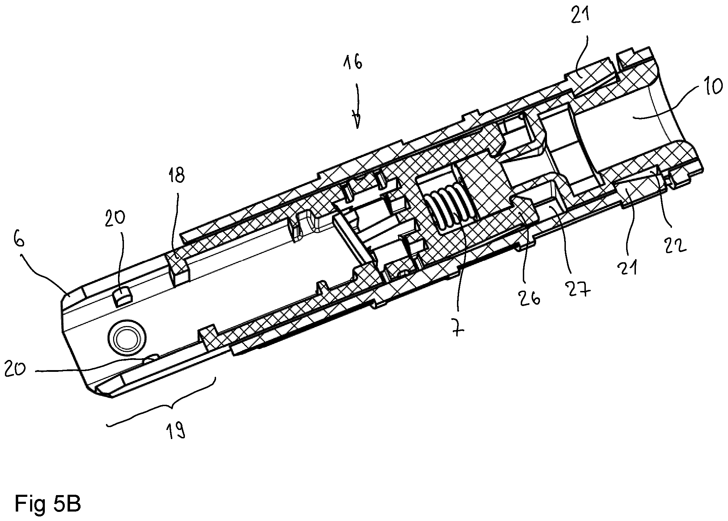

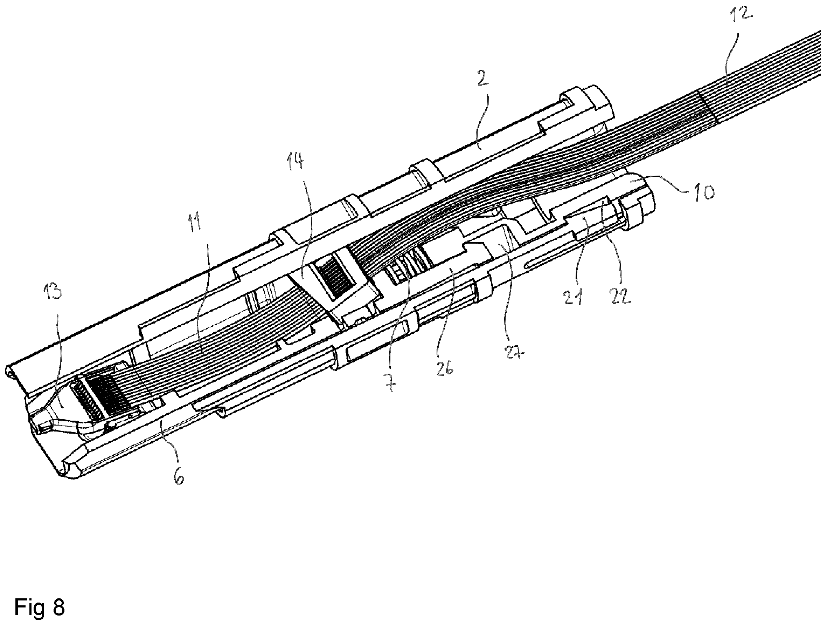

The sectional views of **Figures 3 to 10** show how the ferrule carrier 6 is placed slidingly inside the main body 2. In contrast, the elastic element holder 10 is fixed inside the main body 2 by means of a pair of latching hooks 21 of the main body 2 on opposite side walls of the main body 2 that engage with the distal side wall of a first notch 22 on the outside of the elastic element holder 10. This can be best seen in **Figures 5B** **and** **8****.** Moreover, as can be best seen in **Figure 5A** **and** **6A****,** a proximal end of the elastic element holder 10 abuts against a stop 23 in the bottom of the main body 2.

The elastic element holder 10 comprises a circular blind hole 24 in which the proximal end of the coils spring 7 is placed. The distal end of the coil spring sits on a nose 25 at the proximal end of the ferrule carrier 6. As can also be best seen in **Figures 5B** **and** **8****,** the ferrule carrier 6 and the elastic element holder 10 are held together by a latching hook 26 of the ferrule carrier that engages into a wide second notch 27 of the elastic element holder 10. In its resting position, the coil spring 7 biases the latching hook 26 of the ferrule carrier 6 against the distal wall of the second notch 27. Thereby, the distal wall of the notch 27 acts as a distal stop that determines how far the ferrule carrier 6 can extend into the distal direction at maximum.

**Figures 6A** to **8** show how the cable end section 11 is placed on the ferrule carrier 6. The cable 12 is a flat optical ribbon cable, each of the multiple strands of the cable being an optical wave guide. The collet 14 is placed on the collet seat 16 and the ferrule 13 is placed on the ferrule support 20. The angle of the collet 14, which is determined by the orientation of the collet seat 16, biases the ferrule 13 against the ferrule support 20 by exploiting the elastic properties of the stretch of the cable between the collet 14 and the ferrule 13. The length of the stretch of cable between the collet 14 and the ferrule 13 as well as the positions of the collet holder 15 and the ferrule support 20 determine the position and angle of the ferrule 13.

To assemble the connector housing 1, the ferrule carrier 6 is first combined with the elastic element holder 10 so that the second latching hook 26 of the ferrule carrier 6 engages with the second notch 27 of the elastic element holder 10, while the coil spring 7 is placed in the blind hole 24 and on the nose 25. Then, the end section 12 of the cable is placed in the ferrule carrier 6 and attached to it by securing the collet 14 in the collet holder 15 with the latching hooks 17 of the collet holder 15. The combination of the ferrule carrier 6 with the cable end section 11, the coil spring 7 and the elastic element holder 10 is then slid into the proximal end of the main body 2 until it abuts against the stop 23 in the bottom of the main body 2 and the latching elements 21 of the main body 2 engage into the notch 22 on the outside of the elastic element holder 10 to fixedly attach the elastic element holder 10 to the main body 2.

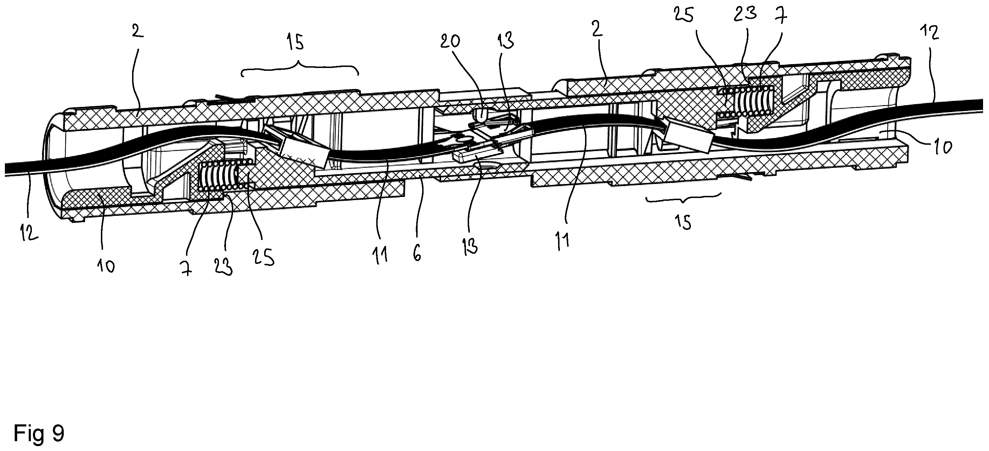

**Figure 9** illustrates how the connector housing 1 can mate with an identical connector housing 1 that is rotated about the mating axis by 180° relatively to the connector housing 1. An end section of the main body 2 of the connector housing 1 is inserted into the cut-out 5 of a second main body 2 of the second connector housing 1 and, conversely, an end section of the second main body 2 of the second connector housing 1 is inserted into the cut-out 5 of the main body 2 of the connector housing 1. This allows for the end sections 19 of the ferrule carriers 6 to overlap and slide past each other until the distal end of each end section 19 abuts against the distal end of the raised wall 18 of the distal end of the remainer of the ferrule carrier 6. At this point, the ferrule carrier 6 and the second ferrule carrier 6 are biased against each other by the coil springs 7. When the ferrule carriers 6 abut against each other, the ferrule 13 and the second ferrule 13 are placed and oriented in the ferrule carrier 6 such that they likewise mate.

The biasing caused by the coil springs 7 ensures that the ferrule carriers 6 abut against each other regardless of the exact amount of which the distal parts of the main body 2 and the second main body 2 extends into each other's cut-outs 5. As a result, tolerances in the positioning of the main bodies 2 can be compensated and a proper mating of the ferrules 13 can be ensured.

A connector housing 1 inserted in the essentially circular through hole of an outer housing 4 is shown at **Figure 10****.** The outer housing 4 is that of a thread-lock connector part 28. To lock the connector housing 1 in the outer housing 4, latching fingers 29 engage in a third notch on the inside of the outer housing 4. The adapter 9 closes off the proximal side of the outer housing 4. The cable 12 extends in proximal direction through the adapter 9 into the cable sheath 8.

The features as described in the above description, claims and figures can be relevant individually or in any combination to realise the various embodiments of the invention.

### Reference numerals

- 1: connector housing
- 2: main body
- 3: sections of the main body with circular outer perimeter
- 4: outer housing
- 5: cut-out of the main body
- 6: ferrule carrier
- 7: spring
- 8: cable sheath
- 9: adapter
- 10: elastic element holder
- 11: end section of the cable
- 12: cable
- 13: ferrule
- 14: collet
- 15: collet holder
- 16: collet seat
- 17: latching hooks of the collet holder
- 18: walls of the ferrule carrier
- 19: distal end section of the ferrule carrier
- 20: ferrule support
- 21: latching hooks of the main body
- 22: first notch of the elastic element holder
- 23: stop in the bottom of the main body
- 24: blind hole of the elastic element carrier
- 25: nose of the ferrule carrier
- 26: latching hooks of the ferrule carrier
- 27: second notch
- 28: thread-lock connector part
- 29: latching finger

## Claims

1. A connector housing (1) for an optical connector comprising a main body (2) and a ferrule carrier (6) attached to the main body (2), **characterised in that** at least a section (3) of the connector housing (1), along the mating axis, has an essentially circular outer perimeter.

2. The connector housing (1) of claim 1, **characterised in that** the ferrule carrier (6) is mounted movably relatively to the main body (2) in a direction that is essentially parallel to a mating axis of the connector housing (1).

3. The connector housing (1) of claim 1 or 2, **characterised in that** the ferrule carrier (6) is elastically mounted in the main body (2).

4. The connector housing (1) of claim 3, **characterised in that** the connector housing (1) is provided with a spring (7) to elastically mount the ferrule carrier (6) in the main body (2).

5. The connector housing (1) of claim 3 or 4, **characterised in that** the ferrule carrier (6) is elastically biased towards a distal end of the main body (2).

6. The connector housing (1) of any one of the preceding claims, **characterised in that** at least a section (3) of the connector housing (1), is a hollow cylinder.

7. The connector housing (1) of any one of the preceding claims, **characterised in that** the main body (2) essentially has the shape of a cylindrical sleeve with a cut-out (5) at its distal end.

8. The connector housing (1) of claim 7, **characterised in that** the ferrule carrier (6) extends inside the main body (2) and beyond the proximal end of the cut-out (5) towards the distal end of the main body (2) to at least partially close the cut-out (5).

9. The connector housing (1) of any of the preceding claims, **characterised in that** it can mate with an identical connector housing (1) that is rotated about the mating axis by 180° relatively to the connector housing (1).

10. The connector housing (1) of any of the preceding claims, **characterised in that** the ferrule carrier (6) can be inserted into the main body (2) from an end of the main body (2) for assembly of the connector housing (1).

11. The connector housing (1) of claim 10, **characterised in that** it comprises an elastic element holder and that an assembly of the ferrule carrier (6), an elastic element and the elastic element holder can be inserted into the main body (2) from the proximal end of the main body (2) for assembly of the connector housing (1).

12. The connector housing (1) of any of the preceding claims, **characterised in that** the ferrule carrier (6) comprises a collet holder (15) for fixing a collet (14) of a cable end section (11) of an optical cable (12) to the ferrule carrier (6).

13. The connector housing (1) of any of the preceding claims, **characterised in that** the ferrule carrier (6) comprises a ferrule support (20).

14. A method of assembling a connector housing (1) for an optical connector, **characterised in that** the method comprises the steps of:
- Assembling the ferrule carrier (6) with an end section (11) of an optical cable (12); and
- Inserting the assembly of the ferrule carrier (6) and the end section (11) of the optical cable (12) into the main body (2).

15. A connector part (28) comprising an outer housing (4) and a connector housing (1) according one of the preceding claims held in the outer housing (4).
